# EUROPEAN PATENT APPLICATION

(11) **EP 0 676 575 A2**
(43) Date of publication of application: **11.10.1995**
(21) Application number: 94250159.4
(22) Date of filing: 17.06.1994
(51) Int. Cl.: F16L 9/147, F16L 33/01, F16L 33/213

(54) **Fitting for connecting a two-layer tube to a sprinkler head**

(30) Priority: 08.04.1994 JP 70925/94
(71) Applicant: Hattori, Takamasa, Sennan-gun, Osaka (JP)
(72) Inventor: Hattori, Takamasa, Sennan-gun, Osaka (JP)
(74) Representative: Wablat, Wolfgang, Dr.Dr.

(57) **Abstract**

A tube fitting of a two-layer structure used for piping a sprinkler head includes a flexible metallic tube (1), and an inner flexible tube (8) disposed inside of the flexible metallic tube (1) . A meshed member (9) is embedded in the inner flexible tube (8) so as to limit increase in length of the flexible tube (1). With this arrangement, the inner periphery of the tube (1) can be protected against corrosion caused by rusting or the like.

## Description

This invention relates to a tube fitting for a sprinker head, more particularly to an improvement of a tube fitting which is used for joining a water supply pipe to a sprinkler head.

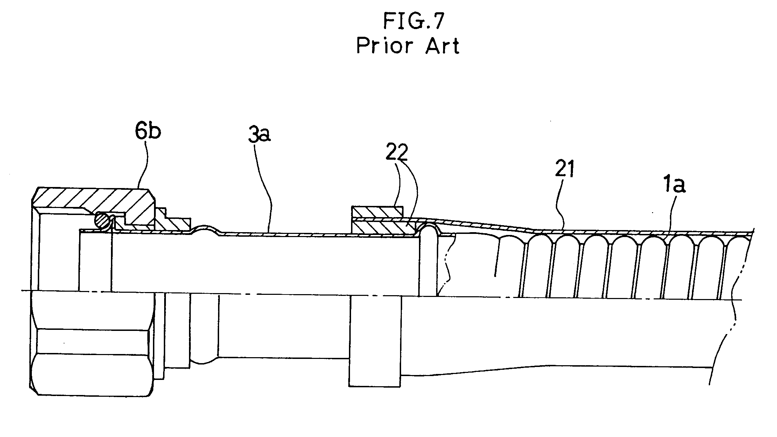

A conventional tube fitting is illustrated in FIG. 7. A flexible metal tube 1a is provided thereon with a cylindrical blade 21 which is made of meshed wires. The blade 21 is clamped at an end by a pair of clamping rings 22 so as to be secured to the inner end of a straight portion 3a of the flexible tube 1a. A cap nut 6b is attached to the outer end of the straight portion 3a.

In the above arrangement, the blade 21 is disposed over the flexible tube 1a so as to limit increase in length of the flexible tube 1a which may occure when fire fighting water is fed into the flexible tube 1a. However, the blade 21 made of the meshed wires is relatively expensive, which leads to raising of manufacturing costs of the tube fitting.

In addition, the tube fitting of this type is disadvantageous in the fact that since the inner surface of the flexible metal tube 1a is not subjected to anti-corrosion treatment, it may be readily corroded or worn away by rusting or the like via contact to the fire fighting water.

It is therefore an object of the present invention is to provide a tube fitting which can limit increase in length of the flexible tube and corrosion of the inner surface of the flexible tube.

Accordingly there is provided a tube fitting of a two-layer structure used for piping a sprinkler head comprising a flexible metallic tube, an inner flexible tube disposed inside of the flexible metallic tube, and a meshed member embedded in the flexible tube so as to limit increase in length of the flexible tube. Further a linear member may be used instead of the meshed member.

With the above arrangement, when fire fighting water is fed to the sprinkler head via the inner flexible tube disposed in the flexible tube, the inner flexible tube with the meshed member therein is radially outwardly expanded by the pressure of water and then forced into projections of a corrugated portion of the flexible tube, thus avoiding increase in length of the flexible tube.

### BRIEF DESCRIPTION OF THE DRAWINGS

FIG. 1 illustrates a partially cross sectional and enlarged view of an essential part of a tube fitting in accordance with one embodiment of the present invention;

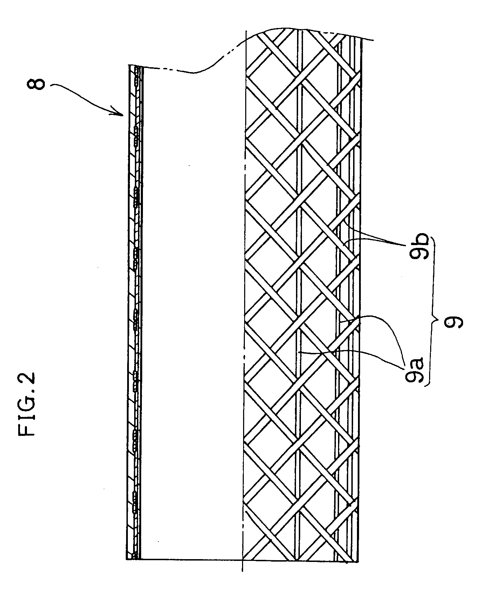

FIG. 2 illustrates a partially cross sectional and enlarged view of an essential part of a tube in accordance with one embodiment of the present invention;
FIG. 3 illustrates a partially cross sectional and enlarged view of an essential part of the tube fitting in accordance with further embodiment of the present invention;
FIG. 4 illustrates a partially cross sectional and enlarged view of an essential part of the tube fitting in accordance with another embodiment of the present invention;
FIG. 5 illustrates a partially cross sectional and enlarged view of an essential part of the tube fitting in accordance with yet another embodiment of the present invention;

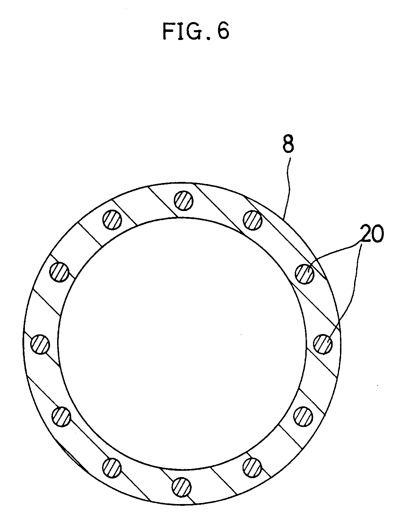

FIG. 6 illustrates a partially cross sectional and enlarged view of an essential part of the tube in accordance with another embodiment of the tube; and
FIG. 7 illustrates a partially cross sectional view of a conventional tube fitting.

### DETAILED DESCRIPTION OF THE PREFERRED EMBODIMENTS

A thin-walled flexible tube 1 made of stainless steel is provided at its center with a corrugated portion. The corrugated portion is defined by projections 2a and troughs 2b, and is terminated at an end by a straight portion 3. An annular detent bulge 4 is formed at a predetermined portion of the straight portion 3 closer to the outer end of the flexible tube 1 by bulging the straight portion 3. A collar 5 is formed at the end of the flexible tube 1 by bending the flexible tube 1.

A cap nut 6 having an inwardly extending flange 6a at its end is loosely fitted on a periphery between the detent bulge 4 and the collar 5. A packing 7 made of synthetic resin is disposed between the inwardly extending flange 6a and the collar 5 of the flexible tube 1 so as to facilitate rotation of the cap nut 6 when screwing.

A flexible tube 8 made of a flexible material such as vinyl chloride and rubber is disposed inside of the flexible tube 1. A meshed member 9 which is embeded in the tube 8 comprises threads 9a which axially extends relative to the tube 8, and threads 9b which diagonally crosses the threads 9a. These threads are made of, for example, synthetic resin such as polyethylene terephthalate, and wires.

A cylindrical sleeve 10 is disposed in a clearance 11 defined by the inner periphery of the straight portion 3 of the flexible tube 1 and the outer periphery of the tube 8. A stepped portion 10a is formed on the inner periphery of the cylindrical sleeve 10 closer to the outer end thereof so as to abut against the adjacent end of the flexible tube 8. The inner periphery of the sleeve 10 and the outer periphery of the tube 8 are joined together via adhesive such as solvent. A flange 10b is formed on the outer periphery of the sleeve 10 such that the collar 5 is interposed between the flange 10b and the inwardly extending flange 6a of the cap nut 6. An O-ring 12 is disposed adjacent to the flange 10b.

When the tube fitting is provided at another end with an identical arrangement to the above defined arrangement, it can be used for joining corresponding parts such as an elbow which is in turn connected to the sprinkler head, and a water supply pipe via the cap nuts 6 disposed on the both ends of the flexible tube 1.

In operation, when fluid such as fire fighting water is fed into the tube 8, tensioned forces exerted by the fire fighting water are applied over the tube 8 in its radial and axial directions. Then the tube 8 radially expands and is forced into the spaces between troughs 2b by the pressure of the fire fighting water, thus avoiding increase in length of the flexible tube 1 in cooperation with the meshed member 9 embedded in the tube 8. Consequently the sprinkler head is not subjected to any adverse effects due to excessive forces exerted by the increase in length of the flexible tube 1, thereby maintaining a preferable connecting condition for an elongated period of time.

In addition, since the inner periphery of the flexible tube 1 is covered with the tube 8, any corrosion generated by rusting or the like can be avoided, and the tube 8, the outer periphery of which is protected with the metallic flexible tube 1 is hardly melted down even in the event of fire. Thus the flexible tube 1 and the inner tube 8 are protected with each other. The tube fitting of this embodiment allows the omission of a blade which is required in conventional tube fittings with the result that it can be be manufactured in a cheap manner.

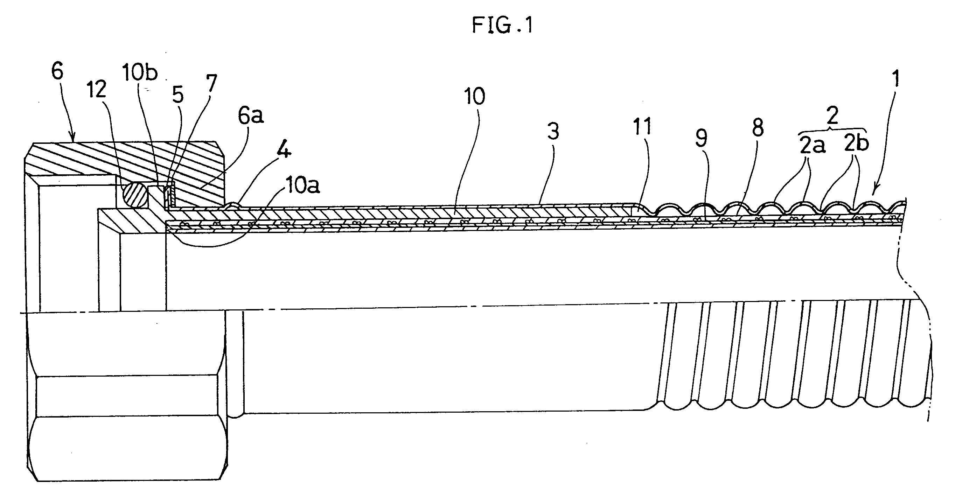

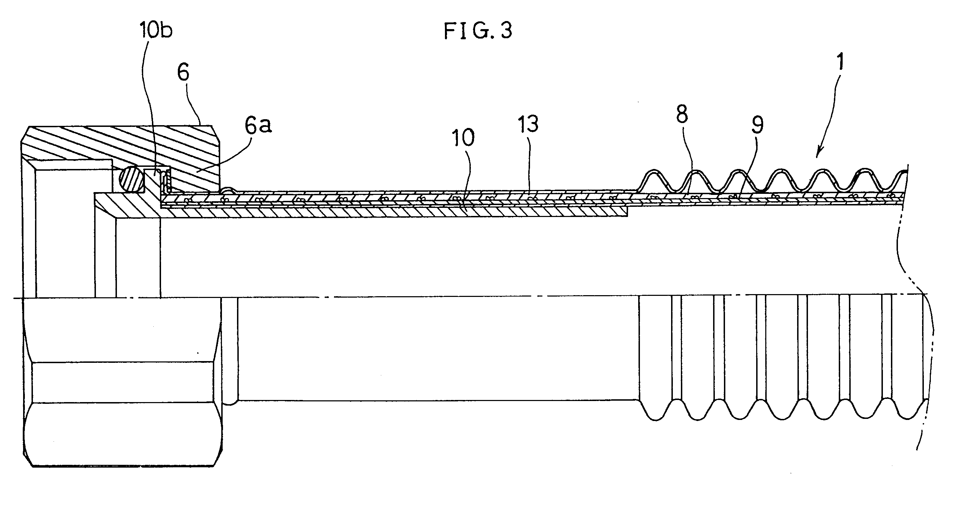

In the above embodiment, the cylindrical sleeve 10 is disposed in the clearance between the inner periphery of the flexible tube 1 and the outer periphery of the tube 8. However, the clearance 11 may be omitted. In this case, the cylindrical sleeve 10 may be disposed inside of the tube 8, as illustrated in FIG. 3. In this arrangement, the outer periphery of the sleeve 10 is bonded to the inner periphery of the tube 8 via adhesive. The tube fitting of FIG. 3 is substantially identical to that of FIG. 1 except for the position of the sleeve 10.

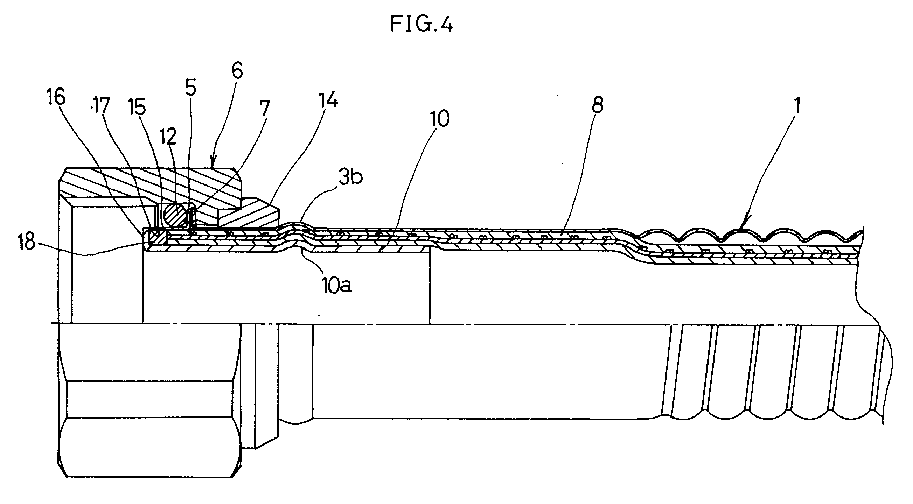

When the sleeve 10 is disposed inside of the tube 8 as described above, the tube fitting may be arranged as illustrated in FIG. 4. That is, external bulges 10a and 3b are respectively formed on the sleeve 10 and the straight portion 3 of the flexible tube 1 such that the tube 8 disposed therebetween is securely held in position and these elements are thus integrated by radially and outwardly pressing the sleeve 10 disposed in the tube 8. A ring-shaped collar 14 is disposed on the flexible tube 1 adjacent to the inner end of the cap nut 6 so as to be engageable with the bulge 3b and limit the axial movement of the cap nut 6 relative to the flexible tube 1.

A cylindrical portion 15 extends from the collar 5 of the flexible tube 1, and a collar 16 is formed at the end of the sleeve 10 by outwardly bending the sleeve 10. Accordingly a space 17 is defined by the cylindrical portion 15, the collar 16 and the adjacent end of the tube 8, in which a sealing element 18 such as in the form of an O-ring is concealed. The O-ring 12 is disposed adjacent to the collar 5 so as to seal between the tube fitting and a corresponding tube.

With this arrangement, the flexible tube 1, the tube 8 and the sleeve 10 are securely held together with the result that increase in length of the tube 8 can be avoided. Another advantage of the tube fitting of this arrangement resides in the fact that since the sealing element 18 arrests intrusion of the fluid into the space between the flexible tube 1 and the sleeve 10, the corrosion of the sleeve 10 and the flexible tube 1 can be avoided.

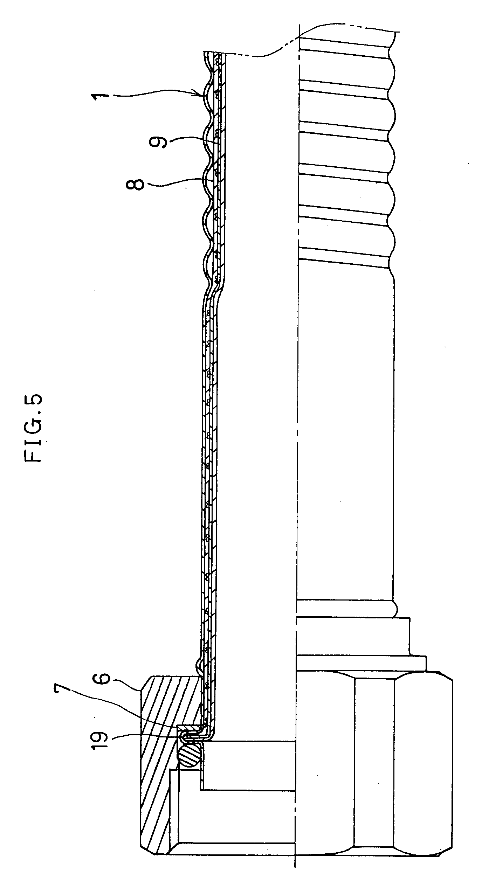

The sleeve 10 may be omitted as illustrated in FIG. 5. In this case, a bulge 19 is formed on the outer periphery of the flexible tube 1. Then the tube 8 is clamped at its adjacent end by this bulge 19. Thus the tube 8 is securely held in position. The packing 7 is disposed between the inwardly extending flange 6a and the bulge 19.

In the above embodiments, the meshed member 9 is used so as to limit increase in length of the flexible tube 1. However, a linear member 20 may be embedded in the tube 8 instead of the meshed member 9. In this arrangement, the linear member 20 extends in the axial direction of the tube 8. This arrangement also attributes to the limitation of increase in length of the flexible tube 1.

## Claims

1. A tube fitting of a two-layer structure used for piping a sprinkler head comprising a flexible metallic tube (1), an inner flexible tube (8) disposed inside of said flexible metallic tube (1) and a meshed member (9) embedded in said inner flexible tube (8) so as to limit increase in length of said flexible tube (1).

2. A tube fitting of a two-layer structure used for piping a sprinkler head comprising a flexible metallic tube (1), an inner flexible tube (8) disposed inside of said flexible metallic tube (1) and a linear member (20) embedded in said inner flexible tube (8) so as to limit increase in length of said flexible tube (1).

3. The tube fitting as set forth in claims 1 or 2, and further comprising a straight portion (3) provided on an end of said flexible tube (1), a cap nut (6) having an inwardly extending flange (6a) at an end and loosely fitted on said straight portion (3), a clearance (11) defined by the inner periphery of said straight portion (3) and the outer periphery of said inner flexible tube (8), a cylindrical sleeve (10), one end of which being disposed in said clearance (11), a flange (10b) formed on the outer periphery of said cylindrical sleeve closer to the opposite end thereof, and a collar (5) formed on the outer end of said straight portion (3), wherein said collar (5) is disposed between said flange (10b) and said inwardly extending flange (6a).

4. The tube fitting as set forth in claims 1 or 2, and further comprising a straight portion (3) provided on an end of said flexible tube (1), a cap nut (6) having an inwardly extending flange (6a) at an end and loosely fitted on said straight portion (3), a cylindrical sleeve (10), one end of which fitted in the adjacent end of said inner flexible tube (8), a flange (10b) formed on the outer periphery of said cylindrical sleeve closer to the opposite end thereof, and a collar (5) formed on the outer end of said straight portion (3), wherein said collar (5) is disposed between said flange (10b) and said inwardly extending flange (6a).

5. The tube fitting as set forth in claims 1 or 2, and further comprising a straight portion (3) provided on an end of said flexible tube (1), a cap nut (6) having an inwardly extending flange at an end and loosely fitted on said straight portion (3), a collar (5) formed on the outer end of said straight portion (3) so as to be in engagement with said inwardly extending flange (6a) and prevent dropping off of said cap nut (6) from said flexible metallic tube, and a cylindrical sleeve (10), one end of which being fitted in the adjacent end of said inner flexible tube (8).

6. The tube fitting as set forth in claim 5, and further comprising a collar (16) formed at the outer end of said cylindrical sleeve (10), a clearance (17) defined by said collar (16), the adjacent end surface of said inner flexible tube (8) and the inner periphery of the outer end of said flexible tube (1), and sealing means (18) disposed in said clearance (17).
